# EUROPEAN PATENT APPLICATION

(11) **EP 4 561 205 A1**
(43) Date of publication of application: **28.05.2025**
(21) Application number: 23859203.4
(22) Date of filing: 22.08.2023
(51) Int. Cl.: H04W 64/00

(54) **POSITIONING METHOD, DEVICE, AND STORAGE MEDIUM**

(30) Priority: 30.08.2022 CN 202211058759
(71) Applicant: ZTE Corporation, Shenzhen, Guangdong 518057 (CN)
(72) Inventor: FAN, Wanpeng, Shenzhen, Guangdong 518057 (CN); GAO, Lei, Shenzhen, Guangdong 518057 (CN); YE, Minya, Shenzhen, Guangdong 518057 (CN); LIU, Weihong, Shenzhen, Guangdong 518057 (CN); ZHOU, Gongcai, Shenzhen, Guangdong 518057 (CN)
(74) Representative: Aipex B.V.
(86) International application number: PCT/CN2023/114205
(87) International publication number: WO 2024/046169

(57) **Abstract**

Provided are a positioning method, a device, and a storage medium. The positioning method applied by a first network element includes receiving a positioning determination request carrying a first identifier and sent by a second network element, where the first identifier is configured to indicate the identifier of a to-be-measured terminal corresponding to a radio access network; and performing uplink time difference of arrival (UL-TDOA) positioning on the to-be-measured terminal based on the first identifier and a serving base station.

## Description

### TECHNICAL FIELD

The present application relates to the field of communications, for example, a positioning method, a device, and a storage medium.

### BACKGROUND

In a practical positioning process, the Gateway Mobile Location Centre (GMLC) and the Location Management Function (LMF) can be deployed at the edge, interacting with the signaling of the operator's core network's Access and Mobility Management Function (AMF) and Unified Data Management (UDM). The GMLC and the LMF still interact according to the 3rd Generation Partnership Project (3GPP) protocols. When the LMF performs Uplink Time Difference of Arrival (UL-TDOA) positioning, it is required to interact with the Radio Access Network (RAN) through the AMF by using the New Radio (NR) Positioning Protocol A (NRPPa) protocol. The RAN reports an uplink channel Sounding Reference Signal (SRS) measurement result to the LMF through an NRPPa Measurement Response message. Consequently, the UL-TDOA positioning measurement process imposes a significant amount of unnecessary signaling overhead on the core network's AMF and also increases the positioning latency.

### SUMMARY

Embodiments of the present application provide a positioning method, a device, and a storage medium, effectively reducing the positioning latency of UL-TDOA and decreasing the signaling overhead of a second network element.

An embodiment of the present application provides a positioning method. The method is applied to a first network element. The method includes receiving a positioning determination request carrying a first identifier and sent by a second network element, where the first identifier is configured to indicate the identifier of a to-be-measured terminal corresponding to a radio access network; and performing uplink time difference of arrival (UL-TDOA) positioning on the to-be-measured terminal based on the first identifier and a serving base station.

An embodiment of the present application provides a positioning method. The method is applied to a second network element. The method includes sending a positioning determination request carrying a first identifier to a first network element to enable the first network element to perform uplink time difference of arrival (UL-TDOA) positioning on a to-be-measured terminal based on the first identifier and a serving base station, wherein the first identifier is configured to indicate an identifier of the to-be-measured terminal corresponding to a radio access network.

An embodiment of the present application provides a communication device. The communication device includes a memory and at least one processor. The memory is configured to store at least one program. When executed by the at least one processor, the at least one program causes the at least one processor to perform the positioning method of any previous embodiment.

An embodiment of the present application provides a storage medium storing a computer program which, when executed by a processor, causes the processor to perform the positioning method of any previous embodiment.

### BRIEF DESCRIPTION OF DRAWINGS

FIG. 1 is a diagram illustrating deployment of GMLC and LMF at the edge according to an embodiment of the present application.
FIG. 2 is a flowchart of a positioning method according to an embodiment of the present application.
FIG. 3 is a flowchart of another positioning method according to an embodiment of the present application.
FIG. 4 is a flowchart illustrating that 5th Generation Mobile Communication Technology Core-Mobile Termination-Location Request (5GC-MT-LR) supports UL-TDOA positioning according to the related art.
FIG. 5 is a flowchart illustrating that 5GC-MT-LR supports UL-TDOA positioning according to an embodiment of the present application.
FIG. 6 is a flowchart of UL-TDOA positioning after the edge LMF is enhanced to support transmission of an NRPPa message by using the Next Generation Application Protocol (NGAP) according to an embodiment of the present application.
FIG. 7 is a diagram illustrating signaling interaction between an LMF node and a Next Generation Radio Access Network (NG-RAN) node according to the related art.
FIG. 8 is a diagram illustrating signaling interaction between an LMF node and an NG-RAN node according to an embodiment of the present application.
FIG. 9 is a block diagram of a positioning apparatus according to an embodiment of the present application.
FIG. 10 is a block diagram of another positioning apparatus according to an embodiment of the present application.
FIG. 11 is a diagram illustrating the structure of a communication device according to an embodiment of the present application.

### DETAILED DESCRIPTION

Embodiments of the present application are described hereinafter in conjunction with drawings. The present application is described below in conjunction with embodiments and the drawings, and the examples illustrated are intended to explain the present application.

Entering the 5G era, positioning capability is one of the core functions of the 5G network and serves as an indispensable foundational service for new applications within the 5G network.

Due to the stringent requirements of many enterprises regarding data security, positioning accuracy, and latency and in consideration that service scenarios of these enterprises are fixed in certain areas, such as airports, subways, hospitals, factories, parks, and shopping malls, it is necessary to deploy control plane positioning network elements (such as GMLC and LMF) at the edge to enhance the positioning accuracy and reduce the positioning latency.

The process of edge deployment of control plane positioning network elements GMLC and LMF involves deploying these elements within enterprises or parks and using the UL-TDOA positioning scheme to satisfy the indoor high-precision positioning requirements of these enterprises or parks.

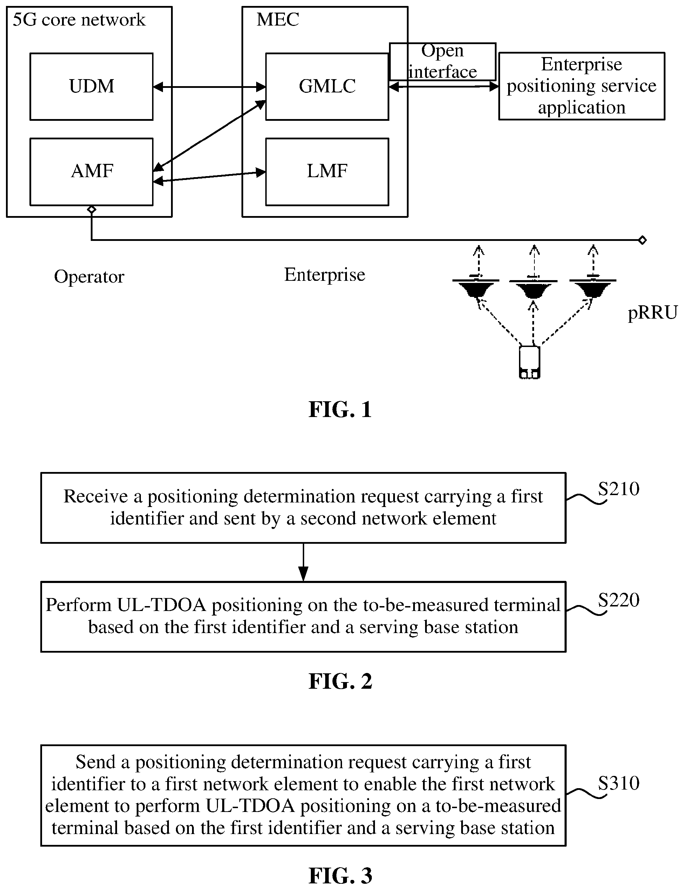

FIG. 1 is a diagram illustrating deployment of GMLC and LMF at the edge according to an embodiment of the present application. As shown in FIG. 1, GMLC and LMF are deployed at the edge, interacting with the signaling of the operator's core network's AMF and UDM. GMLC and LMF still interact according to standard 3GPP protocols. Based on the standards, when the LMF performs UL-TDOA positioning, it is required to interact with the RAN via the AMF using the NRPPa protocol. The RAN reports an uplink channel SRS measurement result to the LMF through an NRPPa Measurement Response message. Therefore, the UL-TDOA positioning measurement process imposes a significant amount of unnecessary signaling overhead on the operator's core network's AMF and also increases positioning latency.

When using the UL-TDOA positioning method for an edge-deployed positioning network element, it is urgent to reduce the positioning latency and effectively reduce the UL-TDOA positioning latency.

This embodiment of the present application provides a positioning method. With this method, the edge LMF is enhanced to support transmission of an NRPPa message by using the NGAP, greatly reducing the signaling overhead imposed on the core network's AMF in the UL-TDOA positioning measurement process and better lowering the UL-TDOA positioning latency and the overall positioning latency.

FIG. 2 is a flowchart of a positioning method according to an embodiment of the present application. This embodiment is applied to the scenario where an edge-deployed positioning network element uses the UL-TDOA positioning method to reduce the positioning latency. This embodiment may be performed by a first network element. The first network element may be a control plane positioning network element. By way of example, the first network element may be LMF. As shown in FIG. 2, this embodiment includes S210 and S220.

In S210, a positioning determination request carrying a first identifier and sent by a second network element is received.

The first identifier is configured to indicate the identifier of a to-be-measured terminal corresponding to a radio access network. In an embodiment, the second network element is AMF. In an embodiment, when sending the positioning determination request, the second network element also transmits the first identifier to the edge-deployed first network element. This allows the first network element to identify the corresponding to-be-measured terminal based on the first identifier.

In S220, UL-TDOA positioning is performed on the to-be-measured terminal based on the first identifier and a serving base station.

In an embodiment, when the first network element communicates with the serving base station, the first network element sends the first identifier to the serving base station to enable the base station to determine the to-be-measured terminal based on the first identifier, and the first network element performs UL-TDOA positioning on the to-be- measured terminal. This embodiment enhances the edge-deployed first network element to support transmission of an NRPPa message via the NG application protocol. This enhancement enables the first network element to directly communicate with the serving base station, thereby effectively reducing the UL-TDOA positioning latency and the overall positioning latency, significantly improving the edge deployment of control plane positioning units to support high-precision positioning based on UL-TDOA, and better satisfying the requirements in practical application scenarios.

In an embodiment, the positioning method applied to the first network element also includes establishing a connection with the RAN through the Next Generation Control plane (NG-C) interface. In this embodiment, the edge-deployed first network element is required to establish a connection with the RAN and support the NG-C interface.

In an embodiment, the positioning method applied to the first network element also includes transmitting an NRPPa message to the RAN via the NG Application Protocol (NGAP). In this embodiment, the edge-deployed first network element is required to support the NGAP protocol, carry the NRPPa message by using the NGAP protocol, and send the NRPPa message to the RAN.

In an embodiment, transmitting the NRPPa message to the radio access network through the NGAP includes at least one of the following: transmitting a downlink-terminal-associated NRPPa message to the radio access network through the NGAP; transmitting an uplink-terminal-associated NRPPa message to the radio access network through the NGAP; transmitting a downlink-nonterminal-associated NRPPa message to the radio access network through the NGAP; or transmitting an uplink-nonterminal-associated NRPPa message to the radio access network through the NGAP.

In this embodiment, the terminal-associated NRPPa message refers to an NRPPa message that requires terminal involvement while the nonterminal-associated NRPPa message refers to an NRPPa message that does not require terminal involvement. In this embodiment, the first network element transmits the NRPPa message to the RAN via the NGAP. The first network element may support at least one of the following transmissions to the radio access network through the NGAP: a downlink-terminal-associated NRPPa message (Downlink UE Associated NRPPa Transport), an uplink-terminal-associated NRPPa message (Uplink UE Associated NRPPa Transport), a downlink-nonterminal-associated NRPPa message (Downlink Non UE Associated NRPPa Transport), or an uplink-nonterminal-associated NRPPa message (Uplink Non UE Associated NRPPa Transport).

In an embodiment, performing the UL-TDOA positioning on the to-be-measured terminal based on the first identifier and the serving base station includes sending an NRPPa measurement request message carrying uplink channel sounding reference signal (SRS) configuration information to the serving base station to enable the serving base station to measure an uplink channel SRS sent by the to-be-measured terminal corresponding to the first identifier, where the NRPPa measurement request message is transmitted through an NGAP, and the uplink channel SRS configuration information carries the first identifier; and receiving an NRPPa measurement response message carrying an uplink channel SRS measurement result and fed back by the serving base station, where the NRPPa measurement response message is transmitted through the NGAP.

In an embodiment, the first network element sends uplink channel SRS configuration information to the corresponding serving base station via the NRPPa Measurement Request message. The NRPPa Measurement Request message contains all the necessary information required for the serving base station or Transmission Receive Point (TRP) to perform the uplink measurement. The NRPPa Measurement Request message is carried by the NGAP. The serving base station then measures the uplink channel SRS of the to-be-measured terminal to obtain the corresponding uplink channel SRS measurement result; sends the uplink channel SRS measurement result to the first network element via the NRPPa Measurement Response message; and transmits the NRPPa Measurement Response message by using the NGAP.

In an embodiment, before sending the NRPPa measurement request message carrying the uplink channel SRS configuration information to the serving base station, the method also includes sending an NRPPa positioning information request message to the serving base station, where the NRPPa positioning information request message is transmitted through the NGAP; receiving an uplink channel SRS resource fed back by the serving base station; and sending an NRPPa positioning information response message to the serving base station, where the NRPPa positioning information response message is transmitted through the NGAP. In this embodiment, the first network element sends the NRPPa Positioning Information Request message to the serving base station to obtain the uplink channel SRS configuration information of the to-be-measured terminal. After receiving the NRPPa Positioning Information Request message, the serving base station determines the available uplink channel SRS resources and configures the uplink channel SRS resources for the to-be-measured terminal. The serving base station then responds to the first network element with the SRS configuration information via an NRPPa Positioning Information Response message.

In an embodiment, before sending the NRPPa measurement request message carrying the uplink channel SRS configuration information to the serving base station, the method also includes acquiring Transmission-Reception Point (TRP) configuration information corresponding to the UL-TDOA positioning, where the TRP configuration information is carried in an NRPPa message, and the NRPPa message is transmitted through the NGAP. In this embodiment, the first network element acquires the TRP configuration information required for UL-TDOA positioning through the NRPPa TRP information exchange process.

In an embodiment, after the NRPPa measurement response message carrying the uplink channel SRS measurement result and fed back by the serving base station is received, the method also includes sending an NRPPa positioning release message to the serving base station to enable the serving base station to release a resource, where the NRPPa positioning release message is transmitted through the NGAP.

In this embodiment, the first network element sends the NRPPa Positioning Release message to the serving base station to instruct the serving base station to release the resources occupied by the to-be-measured terminal and the first network element; and recovers the resources.

FIG. 3 is a flowchart of another positioning method according to an embodiment of the present application. This embodiment is applied to the scenario where an edge-deployed positioning network element uses the UL-TDOA positioning method to reduce the positioning latency. This embodiment may be performed by the second network element. The second network element is a network element within the operator's core network. By way of example, the second network element may be AMF. As shown in FIG. 3, this embodiment includes S310.

In S310, a positioning determination request carrying a first identifier is sent to a first network element to enable the first network element to perform UL-TDOA positioning on a to-be-measured terminal based on the first identifier and a serving base station.

The first identifier is configured to indicate the identifier of a to-be-measured terminal corresponding to a radio access network.

In an embodiment, the first network element performs UL-TDOA positioning on the to-be-measured terminal based on the first identifier and the serving base station in the following manner: sending an NRPPa measurement request message carrying uplink channel sounding reference signal (SRS) configuration information to the serving base station to enable the serving base station to measure an uplink channel SRS sent by the to-be-measured terminal corresponding to the first identifier, where the NRPPa measurement request message is transmitted through an NGAP, and the uplink channel SRS configuration information carries the first identifier; and receiving an NRPPa measurement response message carrying an uplink channel SRS measurement result and fed back by the serving base station, where the NRPPa measurement response message is transmitted through the NGAP.

In an embodiment, before the network element sends the NRPPa measurement request message carrying the uplink channel SRS configuration information to the serving base station, the first network element also sends an NRPPa positioning information request message to the serving base station, where the NRPPa positioning information request message is transmitted through the NGAP; receives an uplink channel SRS resource fed back by the serving base station; and sends an NRPPa positioning information response message to the serving base station, where the NRPPa positioning information response message is transmitted through the NGAP.

In an embodiment, before the network element sends the NRPPa measurement request message carrying the uplink channel SRS configuration information to the serving base station, the first network element acquires Transmission-Reception Point (TRP) configuration information corresponding to the UL-TDOA positioning, where the TRP configuration information is carried in an NRPPa message, and the NRPPa message is transmitted through the NGAP.

In an embodiment, after the first network element receives the NRPPa measurement response message carrying the uplink channel SRS measurement result and fed back by the serving base station, the first network element sends an NRPPa positioning release message to the serving base station to enable the serving base station to release a resource, where the NRPPa positioning release message is transmitted through the NGAP.

For explanation of the first identifier, the positioning determination request, the NRPPa message, and other parameters in the positioning method applied to the second network element, see description of the corresponding parameters in the previous embodiment of the positioning method applied to the first network element.

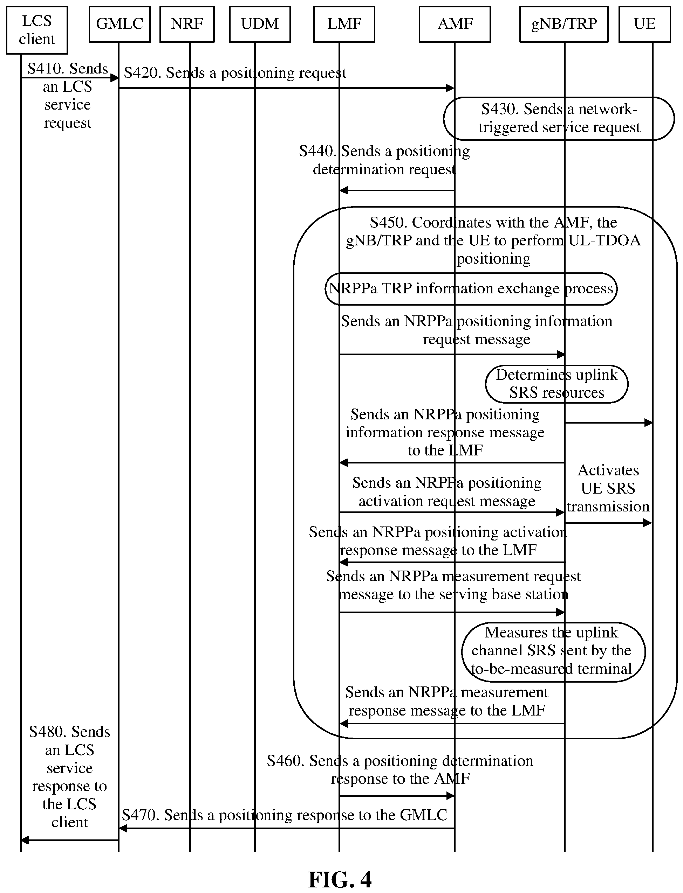

FIG. 4 is a flowchart illustrating that 5GC-MT-LR supports UL-TDOA positioning according to the related art. As shown in FIG. 4, the process of UL-TDOA positioning in the related art includes S410 to S480.

In S410, a Location Service (LCS) service request is sent.

In this embodiment, the LCS client sends an LCS service request to the GMLC to request the location of the to-be-measured UE from the GMLC.

In S420, a positioning request is sent.

In this embodiment, the GMLC calls a Namf_Location_RequestPosInfo Request service for the AMF to request the current location of the UE.

In S430, a network-triggered service request is sent.

In this embodiment, the AMF sends a network-triggered service request to the UE to determine whether to perform paging based on the attachment status of the UE.

In S440, a positioning determination request is sent.

In this embodiment, the AMF sends an Nlmf_Location_DetermineLocation request to the LMF.

In S450, the LMF coordinates with the AMF, next-generation NodeB (gNB)/TRP, and the UE to perform UL-TDOA positioning.

In S460, a positioning determination response is sent to the AMF.

In this embodiment, the LMF sends a positioning determination response to the AMF, allowing the LMF to provide the positioning result to the AMF.

In S470, a positioning response is sent to the GMLC.

In this embodiment, the AMF returns a Namf_Location_ProvidePosInfo response to the GMLC to return the current location of the UE.

Service operations include location estimation, age, and accuracy.

In S480, an LCS service response is sent to the LCS client.

In this embodiment, the GMLC sends a location service response to the LCS client.

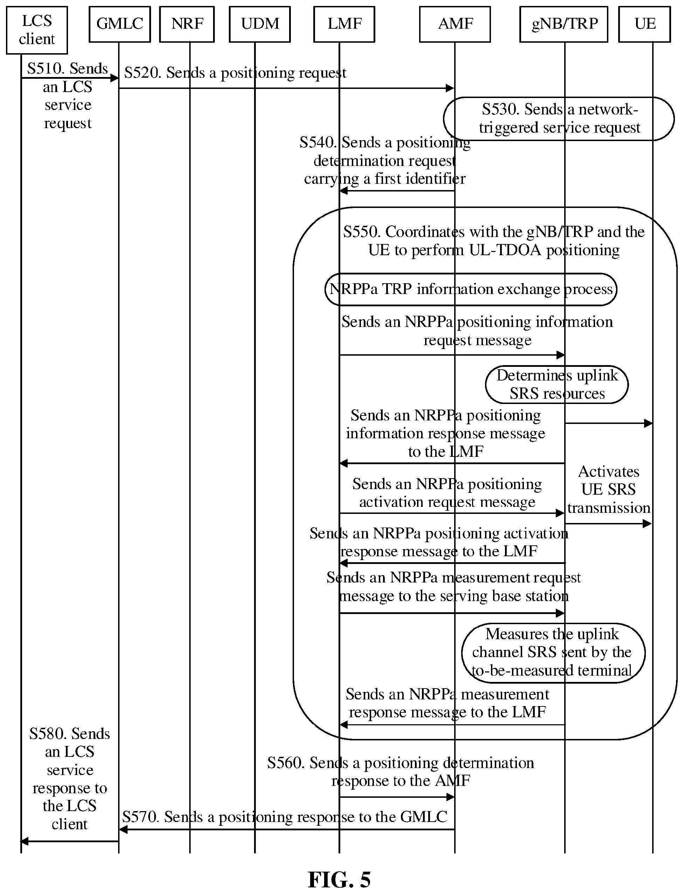

An embodiment that uses the LMF as the first network element and the AMF as the second network element by way of example describes the process of 5GC-MT-LR supporting UL-TDOA positioning after the LMF supports transmission of an NRPPa message via the NGAP. FIG. 5 is a flowchart illustrating that 5GC-MT-LR supports UL-TDOA positioning according to an embodiment of the present application. In this embodiment, the LMF supports transmission of an NRPPa message via the NGAP and supports, through 5GC-MT-LR, the process of UL-TDOA positioning. As shown in FIG. 5, this embodiment includes S510 to S580.

In S510, an LCS service request is sent.

In this embodiment, the LCS client sends an LCS service request to the GMLC to request the location of the to-be-measured UE from the GMLC.

In S520, a positioning request is sent.

The GMLC calls a Namf_Location_RequestPosInfo service for the AMF to request the current location of the UE.

In S530, a network-triggered service request is sent.

The AMF determines whether to perform paging based on the attachment status of the UE.

In S540, a positioning determination request carrying a first identifier is sent.

In this embodiment, the AMF sends an Nlmf_Location_DetermineLocation request carrying the first identifier to the LMF.

In S550, the LMF coordinates with the gNB/TRP and the UE to perform UL-TDOA positioning.

In this embodiment, the LMF is not required to support, through the core network AMF, transmission of the NRPPa message to the RAN.

In S560, a positioning determination response is sent to the AMF.

In this embodiment, the LMF sends a positioning determination response to the AMF, allowing the LMF to provide the positioning result to the AMF.

In S570, a positioning response is sent to the GMLC.

In this embodiment, the AMF returns a Namf_Location_ProvidePosInfo response to the GMLC to return the current location of the UE.

Service operations include location estimation, age, and accuracy.

In S580, an LCS service response is sent to the LCS client.

In this embodiment, the GMLC sends a location service response to the LCS client.

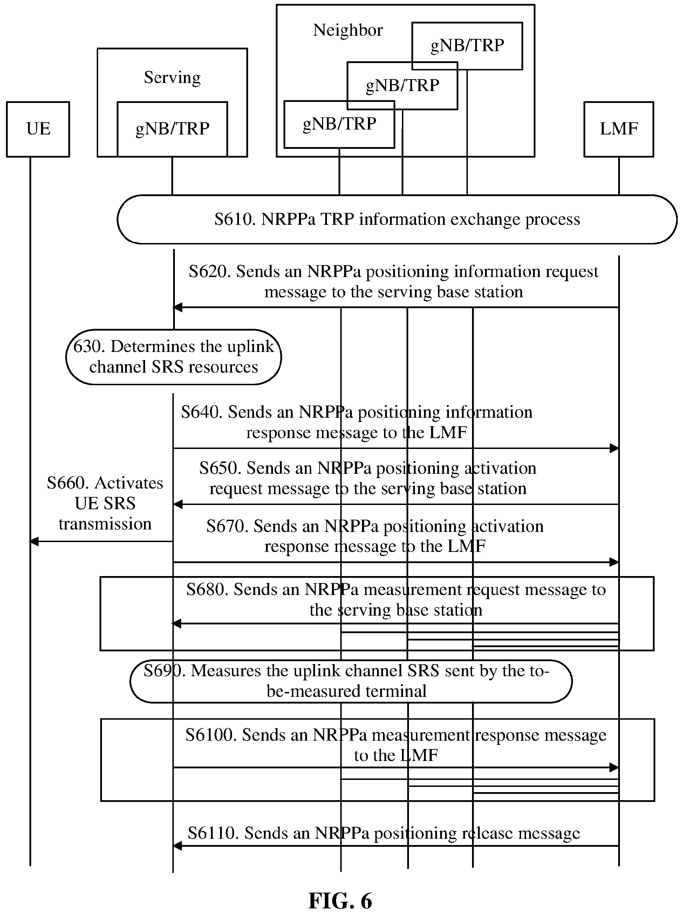

FIG. 6 is a flowchart of UL-TDOA positioning after the edge LMF is enhanced to support transmission of an NRPPa message by using the NGAP according to an embodiment of the present application. As shown in FIG. 6, this embodiment includes S610 to S6110.

In S610, the NRPPa TRP information exchange process is conducted.

In this embodiment, the LMF acquires the TRP configuration information required for UL-TDOA positioning through the NRPPa TRP information exchange process. The NRPPa message carries TRP configuration information and is carried via the NGAP.

In S620, an NRPPa positioning information request message is sent to the serving base station.

In this embodiment, the LMF sends an NRPPa positioning information request message to the serving gNB to request the uplink channel SRS configuration information of the to-be-measured terminal, with the NRPPa message carried via the NGAP.

In S630, the uplink channel SRS resources are determined.

In this embodiment, the serving gNB determines the available uplink channel SRS resources and configures the uplink channel SRS resources for the target UE.

In S640, an NRPPa positioning information response message is sent to the LMF.

In this embodiment, the serving gNB responds to the LMF with SRS configuration information via an NRPPa positioning information response message, with the NRPPa message carried via the NGAP.

In S650, an NRPPa positioning activation request message is sent to the serving base station.

In this embodiment, for semi-persistent or aperiodic SRS, the LMF sends an NRPPa positioning activation request message to the serving gNB to activate UE SRS transmission.

In S660, the serving base station activates UE SRS transmission.

In S670, an NRPPa positioning activation response message is sent to the LMF.

In this embodiment, the gNB activates UE SRS transmission and responds with an NRPPa positioning activation response message, and the target UE transmits SRS according to the timing requirements specified in the SRS resource configuration, with the NRPPa message carried via the NGAP.

In S680, the LMF sends an NRPPa measurement request message to the serving base station.

In this embodiment, the LMF sends uplink channel SRS configuration information to the relevant gNB via an NRPPa measurement request message. The message contains all the necessary information required for the gNB/TRP to perform the uplink measurement, with the NRPPa message carried via the NGAP.

In S690, the serving base station measures the uplink channel SRS sent by the to-be-measured terminal.

In this embodiment, each configured gNB measures the uplink channel SRS sent by the to-be-measured terminal.

In S6100, the serving base station sends an NRPPa measurement response message to the LMF.

In this embodiment, each gNB reports the uplink channel SRS measurement result to the LMF via an NRPPa measurement response message, with the NRPPa message carried via the NGAP.

In S6110, the LMF sends an NRPPa positioning release message.

In this embodiment, the LMF sends a DEACTIVATION message to recover resources, with the NRPPa message carried via the NGAP.

This embodiment of the present application enhances the edge LMF to support transmission of an NRPPa message via the NGAP, effectively reducing the UL-TDOA positioning latency and the overall positioning latency after the GMLC and the LMF are deployed at the edge. This embodiment optimizes and improves the technical solutions for commercializing the control plane positioning network elements deployed at the edge to support indoor high-precision positioning schemes based on UL-TDOA, thereby better satisfying the requirements in practical application scenarios.

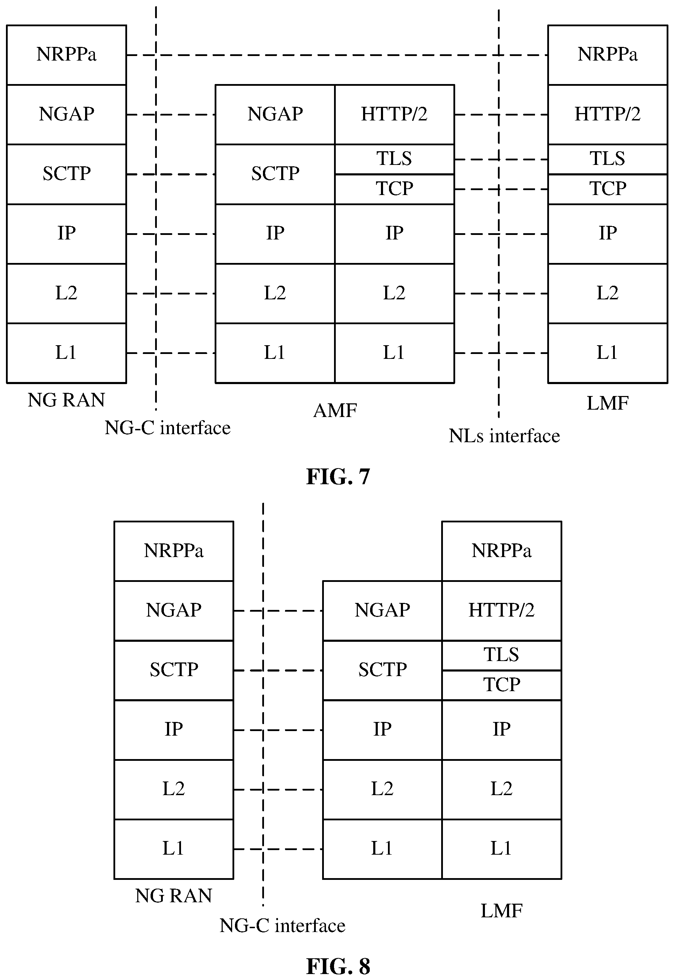

FIG. 7 is a diagram illustrating signaling interaction between an LMF node and an NG-RAN node according to the related art. As shown in FIG. 7, before the LMF is enhanced, the signaling flow requires transmitting an NRPPa message to the RAN through the AMF.

FIG. 8 is a diagram illustrating signaling interaction between an LMF node and an NG-RAN node according to an embodiment of the present application. As shown in FIG. 8, after the LMF is enhanced to support transmission of an NRPP message via the NGAP, the LMF establishes a direct connection with the RAN through the NG-C interface and transmits the NRPPa message by using the NGAP protocol.

In the positioning solution of this embodiment, after the control plane network elements GMLC and LMF are deployed at the edge, indoor high-precision positioning requests within a park or enterprise are completed by the LMF directly interacting with the RAN to execute the positioning measurement process. Moreover, for indoor high-precision positioning requests, the positioning measurement process no longer requires the cooperation of the core network AMF for NRPPa message exchange, effectively reducing the positioning latency.

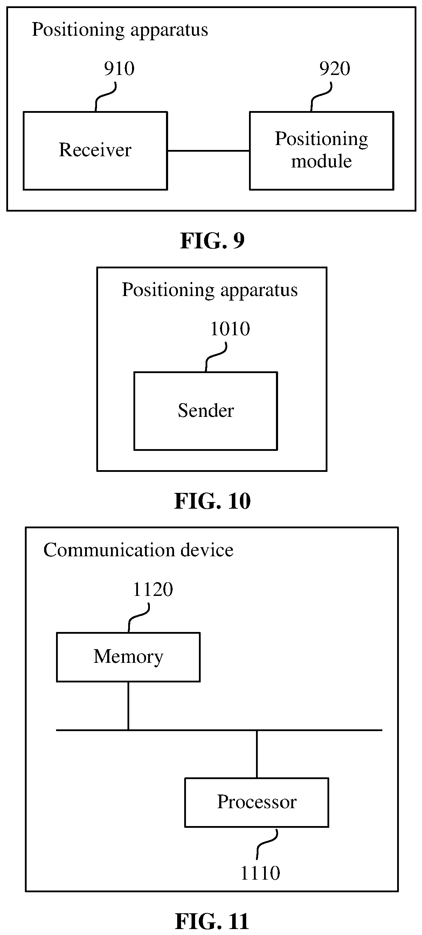

In an embodiment, FIG. 9 is a block diagram of a positioning apparatus according to an embodiment of the present application. This embodiment is applied by a first network element. As shown in FIG. 9, the positioning apparatus of this embodiment includes a receiver 910 and a positioning module 920.

The receiver 910 is configured to receive a positioning determination request carrying a first identifier and sent by a second network element.

The first identifier is configured to indicate the identifier of a to-be-measured terminal corresponding to a radio access network.

The positioning module 920 is configured to perform uplink time difference of arrival (UL-TDOA) positioning on the to-be-measured terminal based on the first identifier and a serving base station.

In an embodiment, the positioning apparatus applied by the first network element also includes an establishment module configured to establish a connection with the radio access network through a next-generation control plane (NG-C) interface.

In an embodiment, the positioning apparatus applied by the first network element also includes a transmission module configured to transmit a New Radio Positioning Protocol A (NRPPa) message to the radio access network through a Next-Generation Application Protocol (NGAP).

In an embodiment, transmitting the NRPPa message to the radio access network through the NGAP includes at least one of the following: transmitting a downlink-terminal-associated NRPPa message to the radio access network through the NGAP; transmitting an uplink-terminal-associated NRPPa message to the radio access network through the NGAP; transmitting a downlink-nonterminal-associated NRPPa message to the radio access network through the NGAP; or transmitting an uplink-nonterminal-associated NRPPa message to the radio access network through the NGAP.

In an embodiment, the positioning module includes a first sending unit configured to send an NRPPa measurement request message carrying uplink channel sounding reference signal (SRS) configuration information to the serving base station to enable the serving base station to measure an uplink channel SRS sent by the to-be-measured terminal corresponding to the first identifier, where the NRPPa measurement request message is transmitted through an NGAP, and the uplink channel SRS configuration information carries the first identifier; and a first receiving unit configured to receive an NRPPa measurement response message carrying an uplink channel SRS measurement result and fed back by the serving base station, where the NRPPa measurement response message is transmitted through the NGAP.

In an embodiment, before the NRPPa measurement request message carrying the uplink channel SRS configuration information is sent to the serving base station, the positioning module also includes a second sending unit configured to send an NRPPa positioning information request message to the serving base station, where the NRPPa positioning information request message is transmitted through the NGAP; a second receiving unit configured to receive an uplink channel SRS resource fed back by the serving base station; and a third sending unit configured to send an NRPPa positioning information response message to the serving base station, where the NRPPa positioning information response message is transmitted through the NGAP.

In an embodiment, before the NRPPa measurement request message carrying the uplink channel SRS configuration information is sent to the serving base station, the positioning module also includes an acquisition unit configured to acquire Transmission-Reception Point (TRP) configuration information corresponding to the UL-TDOA positioning, where the TRP configuration information is carried in an NRPPa message, and the NRPPa message is transmitted through the NGAP.

In an embodiment, after the NRPPa measurement response message carrying the uplink channel SRS measurement result and fed back by the serving base station is received, the positioning module also includes a fourth sending unit configured to send an NRPPa positioning release message to the serving base station to enable the serving base station to release a resource, where the NRPPa positioning release message is transmitted through the NGAP.

The positioning apparatus of this embodiment is configured to implement the positioning method applied by the first network element according to the embodiment shown in FIG. 2. The positioning apparatus of this embodiment has similar implementation principles and technical effects. The details are not repeated here.

In an embodiment, FIG. 10 is a block diagram of another positioning apparatus according to an embodiment of the present application. This embodiment is applied by a second network element. As shown in FIG. 10, the positioning apparatus of this embodiment includes a sender 1010.

The sender 1010 is configured to send a positioning determination request carrying a first identifier to a first network element to enable the first network element to perform uplink time difference of arrival (UL-TDOA) positioning on a to-be-measured terminal based on the first identifier and a serving base station.

The first identifier is configured to indicate the identifier of a to-be-measured terminal corresponding to a radio access network.

In an embodiment, the first network element performs UL-TDOA positioning on the to-be-measured terminal based on the first identifier and the serving base station in the following manner: the first network element sends an NRPPa measurement request message carrying uplink channel sounding reference signal (SRS) configuration information to the serving base station to enable the serving base station to measure an uplink channel SRS sent by the to-be-measured terminal corresponding to the first identifier, where the NRPPa measurement request message is transmitted through an NGAP, and the uplink channel SRS configuration information carries the first identifier; and the first network element receives an NRPPa measurement response message carrying an uplink channel SRS measurement result and fed back by the serving base station, where the NRPPa measurement response message is transmitted through the NGAP.

In an embodiment, before the first network element sends the NRPPa measurement request message carrying the uplink channel SRS configuration information to the serving base station, the first network element also sends an NRPPa positioning information request message to the serving base station, where the NRPPa positioning information request message is transmitted through the NGAP; receives an uplink channel SRS resource fed back by the serving base station; and sends an NRPPa positioning information response message to the serving base station, where the NRPPa positioning information response message is transmitted through the NGAP.

In an embodiment, before the network element sends the NRPPa measurement request message carrying the uplink channel SRS configuration information to the serving base station, the first network element acquires Transmission-Reception Point (TRP) configuration information corresponding to the UL-TDOA positioning, where the TRP configuration information is carried in an NRPPa message, and the NRPPa message is transmitted through the NGAP.

In an embodiment, after the first network element receives the NRPPa measurement response message carrying the uplink channel SRS measurement result and fed back by the serving base station, the first network element sends an NRPPa positioning release message to the serving base station to enable the serving base station to release a resource, where the NRPPa positioning release message is transmitted through the NGAP.

The positioning apparatus of this embodiment is configured to implement the positioning method applied by the second network element according to the embodiment shown in FIG. 3. The positioning apparatus of this embodiment has similar implementation principles and technical effects. The details are not repeated here.

In an embodiment, FIG. 11 is a diagram illustrating the structure of a communication device according to an embodiment of the present application. As shown in FIG. 11, the device of the present application includes a processor 1110 and a memory 1120. One or more processors 1110 may be configured in the device. FIG. 11 uses one processor 1110 as an example. One or more memories 1120 may be configured in the device. FIG. 11 uses one memory 1120 as an example. The processor 1110 and the memory 1120 of the device are connected by a bus or in other manners. FIG. 11 uses connection by a bus as an example. In an embodiment, the device may be a first network element.

As a computer-readable storage medium, the memory 1120 may be configured to store software programs, computer-executable programs, and modules, such as program instructions/modules (for example, the receiver 910 and the positioning module 920 in the positioning apparatus) corresponding to the device of any embodiment of the present application. The memory 1120 may include a program storage region and a data storage region. The program storage region may store an operating system and an application program required by at least one function. The data storage region may store data created according to the use of the device. Additionally, the memory 1120 may include a high-speed random-access memory or a nonvolatile memory such as at least one disk memory, a flash memory or another nonvolatile solid-state memory. In some examples, memories 1120 remote from the processor 1110 and connectable to the device via a network may be provided. Examples of the preceding network include, but are not limited to, the Internet, an intranet, a local area network, a mobile communication network, and a combination thereof.

In the case where the communication device is the first network element, the device may be configured to perform the positioning method applied by the first network element according to any previous embodiment and has corresponding functions and effects.

In the case where the communication device is the second network element, the device may be configured to perform the positioning method applied by the second network element according to any previous embodiment and has corresponding functions and effects.

An embodiment of the present application provides a storage medium including computer-executable instructions. When executed by a computer processor, the computer-executable instructions cause the computer processor to perform a positioning method applied by a first network element. The method includes receiving a positioning determination request carrying a first identifier and sent by a second network element, where the first identifier is configured to indicate the identifier of a to-be-measured terminal corresponding to a radio access network; and performing uplink time difference of arrival (UL-TDOA) positioning on the to-be-measured terminal based on the first identifier and a serving base station.

An embodiment of the present application provides a storage medium including computer-executable instructions. When executed by a computer processor, the computer-executable instructions cause the computer processor to perform a positioning method applied by a second network element. The method includes sending a positioning determination request carrying a first identifier to a first network element to enable the first network element to perform uplink time difference of arrival (UL-TDOA) positioning on a to-be-measured terminal based on the first identifier and a serving base station, where the first identifier is configured to indicate the identifier of the to-be-measured terminal corresponding to a radio access network.

It is to be understood by those skilled in the art that the term "user equipment" encompasses any suitable type of wireless user equipment, for example, a mobile phone, a portable data processing apparatus, a portable web browser, or a vehicle-mounted mobile station.

Generally speaking, embodiments of the present application may be implemented in hardware or special-purpose circuits, software, logic, or any combination thereof. For example, some aspects may be implemented in hardware while other aspects may be implemented in firmware or software executable by a controller, a microprocessor, or another computing apparatus, though the present application is not limited thereto.

Embodiments of the present application may be implemented through the execution of computer program instructions by a data processor of a mobile apparatus, for example, implemented in a processor entity, by hardware, or by a combination of software and hardware. The computer program instructions may be assembly instructions, instruction set architecture (ISA) instructions, machine instructions, machine-related instructions, microcodes, firmware instructions, status setting data, or source or object codes written in any combination of one or more programming languages.

A block diagram of any logic flow among the drawings of the present application may represent program steps, may represent interconnected logic circuits, modules, and functions, or may represent a combination of program steps and logic circuits, modules, and functions. Computer programs may be stored in a memory. The memory may be of any type suitable for a local technical environment and may be implemented using any suitable data storage technology, such as, but not limited to, a read-only memory (ROM), a random-access memory (RAM), or an optical memory device and system (for example, a digital video disc (DVD) or a compact disc (CD)). Computer-readable media may include non-transitory storage media. The data processor may be of any type suitable for the local technical environment, such as, but not limited to, a general-purpose computer, a special-purpose computer, a microprocessor, a digital signal processor (DSP), an application-specific integrated circuit (ASIC), a field-programmable gate array (FPGA), and a processor based on a multi-core processor architecture.

## Claims

1. A positioning method, the method being applied by a first network element and comprising:
receiving a positioning determination request carrying a first identifier and sent by a second network element, wherein the first identifier is configured to indicate an identifier of a to-be-measured terminal corresponding to a radio access network; and
performing uplink time difference of arrival (UL-TDOA) positioning on the to-be-measured terminal based on the first identifier and a serving base station.

2. The method of claim 1, further comprising:
establishing a connection with the radio access network through a next-generation control plane (NG-C) interface.

3. The method of claim 1, further comprising:
transmitting a New Radio Positioning Protocol A (NRPPa) message to the radio access network through a Next-Generation Application Protocol (NGAP).

4. The method of claim 3, wherein transmitting the NRPPa message to the radio access network through the NGAP comprises at least one of the following:
transmitting a downlink-terminal-associated NRPPa message to the radio access network through the NGAP;
transmitting an uplink-terminal-associated NRPPa message to the radio access network through the NGAP;
transmitting a downlink-nonterminal-associated NRPPa message to the radio access network through the NGAP; or
transmitting an uplink-nonterminal-associated NRPPa message to the radio access network through the NGAP.

5. The method of claim 1, wherein performing the UL-TDOA positioning on the to-be-measured terminal based on the first identifier and the serving base station comprises:
sending an NRPPa measurement request message carrying uplink channel sounding reference signal (SRS) configuration information to the serving base station to enable the serving base station to measure an uplink channel SRS sent by the to-be-measured terminal corresponding to the first identifier, wherein the NRPPa measurement request message is transmitted through an NGAP, and the uplink channel SRS configuration information carries the first identifier; and
receiving an NRPPa measurement response message carrying an uplink channel SRS measurement result and fed back by the serving base station, wherein the NRPPa measurement response message is transmitted through the NGAP.

6. The method of claim 5, before sending the NRPPa measurement request message carrying the uplink channel SRS configuration information to the serving base station, the method further comprising:
sending an NRPPa positioning information request message to the serving base station, wherein the NRPPa positioning information request message is transmitted through the NGAP;
receiving an uplink channel SRS resource fed back by the serving base station; and
sending an NRPPa positioning information response message to the serving base station, wherein the NRPPa positioning information response message is transmitted through the NGAP.

7. The method of claim 5, before sending the NRPPa measurement request message carrying the uplink channel SRS configuration information to the serving base station, the method further comprising:
acquiring Transmission-Reception Point (TRP) configuration information corresponding to the UL-TDOA positioning, wherein the TRP configuration information is carried in an NRPPa message, and the NRPPa message is transmitted through the NGAP.

8. The method of claim 5, after receiving the NRPPa measurement response message carrying the uplink channel SRS measurement result and fed back by the serving base station, the method further comprising:
sending an NRPPa positioning release message to the serving base station to enable the serving base station to release a resource, wherein the NRPPa positioning release message is transmitted through the NGAP.

9. A positioning method, the method being applied by a second network element and comprising:
sending a positioning determination request carrying a first identifier to a first network element to enable the first network element to perform uplink time difference of arrival (UL-TDOA) positioning on a to-be-measured terminal based on the first identifier and a serving base station, wherein the first identifier is configured to indicate an identifier of the to-be-measured terminal corresponding to a radio access network.

10. A communication device, comprising a memory and at least one processor, wherein
the memory is configured to store at least one program; and
when executed by the at least one processor, the at least one program causes the at least one processor to perform the positioning method of any one of claims 1 to 8 or the positioning method of claim 9.

11. A storage medium storing a computer program which, when executed by a processor, causes the processor to perform the positioning method of any one of claims 1 to 8 or the positioning method of claim 9.
